(19) **Europäisches Patentamt**
**European Patent Office**
**Office européen des brevets**

(11) **EP 4 459 508 A1**

(12) **EUROPEAN PATENT APPLICATION**

(43) Date of publication:
**06.11.2024 Bulletin 2024/45**

(21) Application number: **23171172.2**

(22) Date of filing: **02.05.2023**

(51) International Patent Classification (IPC):
**G06N 3/047** *(2023.01)* **G06N 3/048** *(2023.01)*

(52) Cooperative Patent Classification (CPC):
**G06N 3/047; G06N 3/048**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Aptiv Technologies AG**
**8200 Schaffhausen (CH)**

(72) Inventor: **PETIG, Christof**
**42369 Wuppertal (DE)**

(74) Representative: **Bardehle Pagenberg**
**Partnerschaft mbB**
**Patentanwälte Rechtsanwälte**
**Prinzregentenplatz 7**
**81675 München (DE)**

(54) **COMPUTER-IMPLEMENTED METHOD TO EXECUTE A SOFTMAX FUNCTION USING PIECEWISE APPROXIMATION**

(57)     This document describes techniques and systems for executing the SoftMax function using piecewise approximation. An example processing device includes a processor that obtains input numbers that may represent the classification output or an offset thereof of a neural network. For each input number, the processor determines a binary number that represents a probability distribution of each input number. The processor uses an approximation of the SoftMax function that uses integer-based operations without using an exponential operation. The binary numbers may represent an exponential value of the input numbers. A normalized probability is then determined from the binary numbers. In this way, the execution of the SoftMax function is optimized for integer-based processors to provide an efficient and accurate normalized probability distribution of classification outputs from a neural network.

Processing Device
100

Processor
102

Computer-Readable Storage Media
104

Registers
106

First Registers (R1$_i$ ... R1$_K$)
108

Second Registers (R2$_i$ ... R2$_K$)
110

Third Register (R3)
112

Fourth Registers (R4$_i$ ... R4$_K$)
114

Fifth Registers (R5$_i$ ... R5$_K$)
116

Sixth Registers (R6$_i$ ... R6$_K$)
118

Seventh Register (R7)
120

Eighth Registers (R8$_i$ ... R8$_K$)
122

*FIG. 1*

EP 4 459 508 A1

**Description**

**TECHNICAL FIELD**

The present disclosure relates to a computer-implemented method for computing a probability distribution of a classification output using integer-based operations. In particular, the present disclosure relates to a computer-implemented method for computing a SoftMax function on a data processing device that avoids exponential operations.

**BACKGROUND**

A SoftMax function normalizes an input vector into a probability distribution proportional to the exponentials of the input numbers. After applying the SoftMax function, each component in the probability distribution has a value between zero and one and the components have a sum of one. The SoftMax function may be used as the last activation function of a neural network (e.g., a classification neural network) to normalize the output of the neural network to a probability distribution over predicted output classes. To execute the SoftMax function, a processor generally needs to calculate an exponential function, which may require a significant amount of computational time and energy.

**SUMMARY**

This document describes techniques and systems for computing a probability distribution of a classification output using integer-based operations. In particular, this document describes techniques and systems for executing the SoftMax function using piecewise approximation and without using exponential operations. An example processing device includes a processor that obtains input numbers $y$, which may be offset from original input numbers $x$. For each input number $y_i$, the processor determines an element number z; by multiplying the input number $y_i$ by an approximation of the inverse of the natural logarithm of two. Each element number z; is then separated into an integral part $int_i$ and a fractional *part fract.* A fraction component $f_{c,i}$ is determined using a piecewise approximation of the fractional *part frac;.* The processor then generates a binary number $q_i$ that represents the exponential value of the corresponding input number $y_i$ using the fraction component $f_{c,i}$ and the integral part $int_i$. A normalized probability $p_i$ is determined from the binary numbers q. In this way, the execution of the SoftMax function is optimized for integer-based processors to provide an efficient and accurate computation.

This document also describes methods performed by the above-summarized system and other configurations set forth herein and computer-executable instructions and means for performing these methods.

This Summary introduces simplified concepts related to executing the SoftMax function using piecewise approximation described in the Detailed Description and Drawings. This Summary is not intended to identify essential features of the claimed subject matter, nor is it intended to determine the scope of the claimed subject matter.

**BRIEF DESCRIPTION OF THE DRAWINGS**

Exemplified embodiments for executing a SoftMax function using piecewise approximation are described in this document with reference to the following figures. The same numbers may be used throughout the drawings to reference like features and components:

FIG. 1 illustrates an exemplified processing device for executing a SoftMax function using piecewise approximation;
FIG. 2 illustrates an exemplified flow chart to execute a SoftMax function using piecewise approximation;
FIGs. 3-1 and 3-2 illustrate exemplified flow charts to determine element numbers as part of executing a SoftMax function using piecewise approximation;
FIG. 4 illustrates another exemplified flow chart to execute a SoftMax function using piecewise approximation; and
FIG. 5 illustrates an exemplified method to execute a SoftMax function using piecewise approximation.

**DETAILED DESCRIPTION**

Multi-layer neural networks generally end in a penultimate layer (or a penultimate activation layer) that outputs real-valued scores or probabilities that are not conveniently scaled. The SoftMax function may be used in the final layer (or last activation layer) of multi-layer neural networks to convert the scores or probabilities to a normalized probability distribution, which may be displayed to a user or used as input to another system. In other words, the SoftMax function normalizes an input vector of real numbers (e.g., the scores or probabilities) into a probability distribution that is proportional to the exponentials of the input vector. For example, with an input vector x of K real numbers $x_i$ with $i$ = 1, ... , K

and $x = (x_1, \ldots, x_K) \in \mathbb{R}^K$, the SoftMax function may be defined by the following mathematical formula:

$$\sigma(x)_i = \frac{e^{x_i}}{\sum_{j=1}^{K} e^{x_j}}$$

, where $\sigma(x)_i$ represents an output probability. After applying the SoftMax function, each component is in the interval (0,1) and the components sum to 1.

As an illustrative example, consider a classification neural network for recognizing cats and dogs in images. The neural network obtains as input an image and outputs a vector x that includes examples values of 2.5 for a cat, 0.5 for a dog, and 1.5 for unknown. In a first step, a processor running the SoftMax function may first subtract the maximum input value 2.5 to turn the original input values 2.5, 0.5 and 1.5 into shifted or offset input values 0, -2, -1 that are either negative or zero. Then, the processor may calculate the exponentials of the shifted input values (e.g., exp(0), exp(-2), exp(-1)), add the exponentials, and normalize the output by dividing each exponential by the sum of the exponentials to obtain output values between 0 and 1 that sum to 1. These output values provide a distribution of probabilities. In this illustrative example, the distribution of probabilities includes 56% for a cat, 11% for a dog, and 33% for unknown.

As shown in this illustrative example, the SoftMax function generates a non-linear mapping of the input vector. In other words, the most probable outcomes are amplified and the less probable outcomes (or non-meaningful outcomes) are significantly reduced or even suppressed. In other words, if one of the input numbers is small or negative (e.g., 0.5 for a dog), the SoftMax function turns it into a small probability (e.g., 11% for a dog). Similarly, if an input number is positive and large (e.g., 2.5 for a cat), the SoftMax function turns it into a large probability (e.g., 56% for a cat). The sum of the probabilities (or percentages) of the different classes is 100%. This non-linear mapping is achieved using the exponential function.

To execute the SoftMax function, a processor generally needs to calculate an exponential function, which is very costly in computing resources and energy consumption. The processor generally uses floating-point operations, resulting in many computing cycles, a long run time, and high energy usage. Furthermore, in a microcontroller or a digital signal processor with more limited capacities than other processors, floating-point numbers may be avoided because they involve a higher energy consumption and a higher demand on processing resources.

This document describes techniques and systems for executing the SoftMax function using piecewise approximation and integer-based operations. As one example, a processor obtains input numbers $y$, which may be offset from original input numbers x. For each input number $y_i$, the processor determines an element number $z_i$ by multiplying the input number $y_i$ by an approximation of the inverse of the natural logarithm of two. Each element number $z_i$ is then separated into an integral part $int_i$ and a fractional part $frac_i$. A fraction component $f_{c,i}$ is determined using a linear approximation, a quadratic approximation, or any other piecewise approximation of the fractional part $frac_i$. The processor then generates a binary number $q_i$ that represents the exponential value of the corresponding input number $y_i$ by right-shifting the fraction component $f_{c,i}$ by the integral part $int_i$. A normalized probability $p_i$ is determined by dividing a corresponding binary number $q_i$ by the sum of the binary numbers q. In this way, the execution of the SoftMax function is optimized for digital signal processors and similar controllers to provide an efficient and accurate computation. In particular, the processor executes the SoftMax function in a manner that requires fewer computing efforts and less run time. Non-limiting uses of this more efficient and accurate SoftMax computation is for image processing for the interior and/or exterior of host vehicles. For example, the image processing could be used to classify objects (e.g., road barriers, pedestrians, automobiles, bicycles, motorcycles, buildings) in the surrounding environment of a host vehicle in order to improve assisted-driving (e.g., driver alert systems) and autonomous-driving operations (e.g., object tracking). Similarly, the image processing could be used to classify objects (e.g., passengers, young children, baby carrier, box, work bag) in the interior of a host vehicle in order to improve interior monitoring systems (e.g., safety belt detection systems).

This example is just one example of the described techniques and systems for executing the SoftMax function using piecewise approximation. This document describes other examples and implementations.

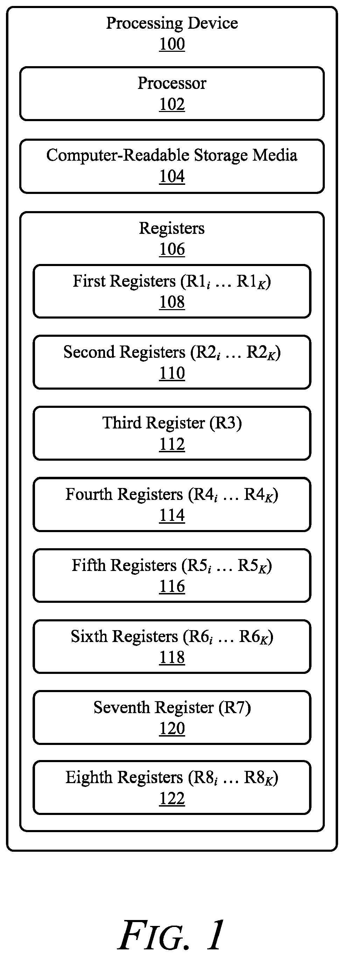

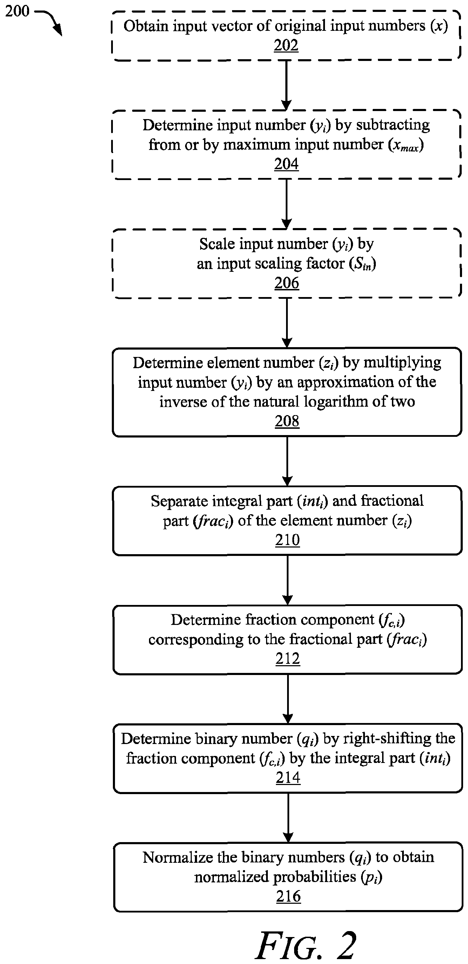

FIG. 1 illustrates an exemplified processing device 100 for executing the SoftMax function using piecewise approximation. The processing device 100 may be an integer-based digital signal processor, controller, microprocessor, or system-on-chip. The processing device 100 may include a processor 102, a computer-readable storage media (CRM) 104, and multiple registers 106. The processor 102 executes instructions stored in the CRM 104, on one or more disks, memories, or other non-transitory computer-readable storage media. For example, the processor 102 may execute the instructions in the CRM 104 to carry out the methods described in FIGs. 2 through 5.

The registers 106 may include first registers 108 (e.g., $R1_i \ldots R1_K$), second registers 110 (e.g., $R2_i \ldots R2_K$), a third register 112 (e.g., R3), fourth registers 114 (e.g., $R4_i \ldots R4_K$), fifth registers 116 (e.g., $R5_i \ldots R5_K$), sixth registers 118 (e.g., $R6_i \ldots R6_K$), a seventh register 120 (e.g., R7), and eighth registers 122 (e.g., $R8_i \ldots R8_K$). In some instances, some registers may be repurposed as other registers (e.g., the first registers 108 may be repurposed or reused as the fourth registers 114). In one implementation, the registers 106 include TV-bit registers and N/2-bit registers, where the number $N$ is of the form $2^n$ with $n$ being an integer greater than or equal to 1 (e.g., $n \geq 1$). For example, $N$ may be equal to 32. In other examples, $N$ may be equal to 16 or 64 or some other value. As described in relation to FIGs. 2 through 5, the registers 106 provide data holding elements that the processor 102 may directly access while carrying out the methods described in FIGs. 2 through 5.

The processing device 100 turns the exponentiation of the SoftMax function into an exponentiation of two using the following mathematical relationship in Equation (1):

$$e^{y_i} = (2^{log_2 e})^{y_i} = 2^{log_2 e * y_i} = 2^{z_i} \tag{1}$$

where $z_i = log_2 e * y_i = \frac{1}{ln(2)} * y_i$ and $\frac{1}{ln(2)} \cong 1.442695041$. The processing device 100 is more efficient and performs fewer computing cycles at calculating two to the power of a given exponent than calculating the exponential function. To further increase the efficiency of performing the SoftMax function, the processing device 100 also uses piecewise approximation to replace the floating-point calculation of the exponential function by some shifts in registers, integer additions, integer multiplications, and limiting of floating-point operations. In this way, the processing device 100 can provide more efficient image processing to classify objects inside or exterior to a host vehicle.

FIG. 2 illustrates an exemplified flow chart 200 to execute a SoftMax function using piecewise approximation. Flow chart 200 is shown as exemplified operations (or acts) performed, but not necessarily limited to the order or combinations in which the operations are shown herein. Further, any one of one or more of the operations may be repeated, combined, or reorganized to provide other flow charts. In portions of the following discussion, reference may be made to the entities detailed in FIG. 1, reference to which is made for example only. The techniques are not limited to performance by one entity or multiple entities.

In performing the operations of the flow chart 200, the processor 102 executes mainly integer (fixed-point) operations and some shifts in registers, which allows for a determination of the probability $p_i$ corresponding to the input numbers $y_i$ in a fast manner. The input numbers $y$ generally represent the offset (and potentially scaled) values of the classification output (e.g., original input numbers x) from a neural network. The run time and energy consumption of the processor 102 are significantly reduced compared to performing an exponential calculation for each input number. Furthermore, a microcontroller or digital signal processor without capacity for floating-point calculations or one that has an integer-based architecture may easily use the SoftMax function using the method 200.

In an optional step 202, the processor 102 receives an input vector of $K$ original input numbers $x$. The original input numbers $x$ are real values. For example, the original input numbers $x$ may be the real-valued scores at the output of a multi-layer neural network, such as a classification neural network, or a penultimate activation layer thereof.

In an example implementation, typically in a case that the input vector is an output from a neural network, the original input numbers x received in the step 202 are already scaled by an input scaling factor $S_{in}$. The input scaling factor is generally equal to a power or an exponent of 2 (e.g., $S_{in} = 2^\sigma$) and rounded to an integer (e.g., the nearest integer) so as to be stored in $N$-bit registers. For example, the scaling happens in the input to the neural network which delivers data into a SoftMax operator. In such a case, the scaling happens outside the SoftMax operator. The input scaling factor $S_{in}$ may be chosen depending on the expected smallest and largest values of the original input numbers and the size of the $N$-bit registers. After scaling by $S_{in}$, all the scaled original input numbers $x$ can advantageously fit $-2^{N-1}$ and $2^{N-1}-1$ (in the signed integer representation).

In an optional step 204, the processor 102 determines an input number $y_i$ as an offset from each original input number $x_i$ (which may already scaled by $S_{in}$) and obtains $K$ input numbers $y_i$ corresponding respectively to the $K$ original input numbers $x_i$ (e.g., positive real values, negative real values, or zero) with $i = 1, ..., K$. In this implementation as illustrated in Table 1 (below), the input numbers $y$ are positive or zero. Thus, determining each input number $y_i$ from the original input numbers $w_i$ includes selecting the maximum original input number $x_{max}$ and subtracting the original input numbers $x$ from the maximum original input number $x_{max}$ so as to obtain the input numbers $y$ that are positive or equal to zero. In other words, the input numbers $y$ are calculated based on the expression $y_i = x_{max} - x_i$. The $K$ input numbers $y$ may be stored in the first N-bit registers $R1_i$ (e.g., the first registers 108) by overwriting the original input numbers $x$. Alternatively, the K input numbers $y$ may be stored in other A-bit registers (e.g., the second registers 110).

By determining the input numbers $y$ to be positive values or zero, the processor 102 implements a positive integer approach. In an alternative implementation, the processor 102 may use a negative integer approach. In this alternative implementation, each input number $y_i$ is negative or zero and derived from the original input number $x_i$ by subtracting the maximum original input number $x_{max}$ from each original input number $w_i$ so as to obtain the input number $y_i$. This alternative implementation may be preferred because the negative branch of the exponential function is numerically more stable than the positive branch. If this alternative implementation with negative values or zero, the constants A, B, C, D, and E of the piecewise approximation in step 212 will have different values but may be determined in a similar manner as described below.

In another implementation, the processor 102 may execute the SoftMax function using piecewise approximation without offsetting the original input numbers x to obtain the input numbers $y$. Instead, the processor 102 may perform steps 206 through 216 (or some subset thereof) using the original input numbers x as the input to steps 206 and 208 and obtain a normalized probability distribution thereof.

In an optional step 206, the offsets of the original input numbers $x$ are scaled by the processor 102 by the input scaling factor $S_{in}$. For example, the original input numbers x in Table 1 below are scaled by $2^{27}$ and rounded to the nearest integer to be stored in 32-bit registers (e.g., the registers 106), which is illustrated in Table 2 below. The corresponding decimal values are indicated in Table 2 below.

**Table 1**

| $x_i$ | $y_i$ | $z_i$ | $int_i$ | $frac_i$ | $f_{c,i}$ | $q_i$ | $q_{i,n}$ | $p_i$ (%) |
|---|---|---|---|---|---|---|---|---|
| 2.5 | 9.5 | 13.706 | 13 | 0.706 | 40067 | 5 | 5 | 0.0076 |
| 7 | 5 | 7.213 | 7 | 0.213 | 56670 | 443 | 440 | 0.6714 |
| -10 | 22 | 31.739 | 31 | 0.739 | 39151 | 0 | 0 | 0 |
| 12 | 0 | 0.000 | 0 | 0.000 | 65535 | 65535 | 65079 | 99.3027 |
| 0.01 | 11.99 | 17.298 | 17 | 0.298 | 53418 | 0 | 0 | 0 |
| 1 | 11 | 15.870 | 15 | 0.870 | 35755 | 1 | 1 | 0.0015 |
| 0.000001 | 12 | 17.312 | 17 | 0.312 | 52898 | 0 | 0 | 0 |
| 2 | 10 | 14.427 | 14 | 0.427 | 48792 | 3 | 3 | 0.0046 |
| 3 | 9 | 12.984 | 12 | 0.984 | 33115 | 8 | 8 | 0.0122 |
| -16 | 28 | 40.395 | 40 | 0.395 | 49904 | 0 | 0 | 0 |

**Table 2**

| $x_i$ | Scaled $x_i$ |
|---|---|
| 2.5 | 335,544,320 |
| 7 | 939,524,096 |
| -10 | -1,342,177,280 |
| 12 | 1,610,612,736 |
| 0.01 | 1,342,177 |
| 1 | 134,217,728 |
| 0.000001 | 134 |
| 2 | 268,435,456 |
| 3 | 402,653,184 |
| -16 | -2,147,483,648 |

Table 1 is an exemplified table illustrating example original input numbers x in the first column and offset positive input numbers $y$ (e.g., $y_i = x_{max} - x_i$) in the second column, as discussed below with respect to step 206. The numbers are represented by decimal values without the scaling by $S_{in}$, for the sake of clarity. As described in greater detail above, the input numbers $y$ can also be negative (e.g., $y_i = x_i - x_{max}$). The third column contains the numerical values of the element number z; in the decimal domain, the fourth column contains the corresponding integral parts $int_i$ in the decimal domain, and the fifth column contains the corresponding fractional *part frac;* in the decimal domain. The sixth column of Table 1 contains the scaled values of the fraction component $f_{c,i}$ corresponding to the quadratic approximation of two raised to the negation of the fractional part $frac_i$ indicated in the fifth column. The seventh column of Table 1 contains the scaled value of the binary number $q_i$ in each result register R6$_i$ (e.g., the sixth registers 118) (after the right shifting of the fraction component $f_{c,i}$ by the integral part $int_i$). As shown in the seventh column of Table 1, the result registers R6$_i$ that correspond to the non-meaningful original input numbers $x_i$ (e.g., $x_3$, $x_5$, $x_7$, $x_{10}$) are set to zero.

In a step 208, which may be preceded by obtaining an input vector of input numbers *y,* the processor 102 determines element numbers *z.* Each input number $y_i$ is divided by an approximation of the natural logarithm of two (e.g., ln(2)) or multiplied by an approximation of the inverse of the natural logarithm of two (e.g., 1/ln(2), $\cong$ 1.442695041) to obtain the corresponding element number $z_i$ (corresponding to $z_i = y_i$ / ln(2)). In one implementation, the multiplication of each input number $y_i$ stored in a *N*-bit register (e.g., the first register 108, $R1_{i,}$) by the constant value approximating the inverse of the natural logarithm of two (e.g., 1/ln(2)) is optimized by using a cheaper *N/2*-bit by *N/2*-bit multiplication resulting in a *N*-bit result. As an illustrative example, *N* may be equal to 32 bits. The step 208 ends by providing the element numbers *z* in the binary domain scaled by $S_{in}$. The element numbers *z* may be stored in *N*-bit registers (e.g., the fifth registers 116 $R5_i$)

In a step 210, the processor 102 separates the integral part $int_i$ and the fractional part $frac_i$ of each element number $z_i$. The integral part $int_i$ is an integer. It can be derived from the fifth register 116 $R5_i$ by right shifting by $\sigma$ bits, which results in discarding all fractional bits due to the right shift. The fractional part $frac_i$ is a value that is less than 1 and greater than zero or equal to zero. It is also derived from the fifth register 116 R5; for example by masking off the bits corresponding to the integral part $int_i$.

In a step 212, the processor 102 determines a fraction component $f_{c,i}$ corresponding to the fractional part $frac_i$. The fraction component $f_{c,i}$ is determined using either a linear approximation or a quadratic approximation that utilizes scaling of ($2^{N/2}$ - 1). For example, if *N* equals 32, then the fractional part $frac_i$ is determined using scaling of $2^{16}$ - 1 or 65,535. In particular, piecewise approximation is used to approximate the value of $2^{-frac_i}$ using the fractional *part frac;*. The linear approximation utilizes the following equation: $f_{c,i}$ = A + B*x*. With the endpoints (e.g., 0.0 and 1.0) chosen to match the actual value and with scaling of 65,535, the constants A and B may have values of 65,535 and -32,767, respectively. The quadratic approximation utilizes the following equation: $f_{c,i}$ = C + D*x* + E*x²*. With the endpoints and midpoints (e.g., 0.0, 0.5, and 1.0) chosen to match the actual value and with scaling of 65,535, the constants C, D, and E may have values of 65,535, -44011.52838, and 11244.2838, respectively. The constants A, B, C, D, and E may be determined with different points matching the actual values or with different scaling. In addition, a higher-order piecewise approximation (e.g., third order) or a Taylor approximation may be used to approximate the fraction component $f_{c,i}$.

In a step 214, for each input number $y_i$, the processor 102 determines in a sixth *N/2*-bit register $R6_i$ (e.g., the sixth register 118, also termed a result register) a binary number $q_i$, which is representative of the exponential value of the input number $y_i$, by right-shifting the respective fraction component $f_{c,i}$ by the respective integral part $int_i$.

The right shifting by the integral part $int_i$ results in discarding the *r* less significant bits of the fraction component $fc_i$, where *r* is a number equal to $int_i$. For large values of the integral part $int_i$, all bits of the result register $R6_i$ become equal to zero. The binary number $q_i$ resulting from the right shifting in each result register $R6_i$ may be expressed by the following formula:

$$q_i = 2^{-int_i} * fc_i = 2^{-int_i} * (2^B - 1) * 2^{\left(\frac{-j}{M}\right)} = (2^B - 1) * 2^{-(int_i + \frac{j}{M})}$$

$$= (2^B - 1) * 2^{-(int_i + frac_i)} = (2^B - 1) * 2^{-z_i} == (2^B - 1) * e^{-y_i}$$

$$= (2^B - 1) * e^{x_i - x_{max}}$$

As shown by the above relationship, the binary number $q_i$ is representative of the exponential value of the original input number $x_i$. In particular, it is proportional to the exponential of $x_i$.

Then, in a step 216, the processor 102 normalizes the binary numbers *q* stored in the result registers $R6_i$ in order to determine the *K* normalized probabilities $p_i$ by dividing each binary number $q_i$ by the sum of the binary numbers *q*. In particular, the processor 102 adds all the result registers $R6_i$ with *i* varying from 1 to *K* to obtain a sum number $\Sigma$ of the binary numbers *q* in a sum register R7 (e.g., the seventh register 120) that is a *N*-bit register. In the illustrative example of Table 1, the decimal value of the sum $\Sigma$ is 65995.

In one exemplified implementation, normalization of the binary numbers *q* may involve several different steps or sub-steps. The processor 102 may obtain a normalization factor $f_n$ calculated using the following expression:

$f_n = \frac{(V_{100} \ll S_n)}{\Sigma}$ , where $V_{100}$ represents the value obtained by setting to one (1) all bits in a *N/2*-bit result register $R6_i$ (e.g., the sixth register 118) and corresponds to the binary number $q_i$ giving a probability value of 100% and « $S_n$ represents a left shift by a normalization scaling factor $S_n$ used for the normalization (e.g., *N/2,* which corresponds to a scale by $2^{N/2}$ in the decimal domain). In some implementations, for precision improvement, the factor $f_n$ is rounded using

the modified expression $f_n = \frac{\left(V_{100} \ll S_n + \frac{\Sigma}{2}\right)}{\Sigma}$. The normalization factor $f_n$ may be stored in a memory (e.g., the CRM 104). With reference to the example in Table 1, the value $V_{100}$ is 65535, the sum is 65995, the scaling factor is 16, and

the normalization factor $f_n$ is given by the following expression: $f_n = \frac{\left(65535 \ll 16 + \frac{65995}{2}\right)}{65995} = 65080$.

The processor 102 then applies the normalization factor $f_n$ to each result register R6; with a rescaling by the factor $1/S_n$ to obtain a normalized binary number $q_{i\_n}$ in the result register R6$_i$. This operation may be expressed as $q_{i\_n}$ = $(q_i * f_n)$ » $S_n$, where » $S_n$ represents a right shift by $S_n$ in the result register R6$_i$. The processor 102 may also round to the nearest integer by adding $2^{Sn-1}$ to $q_i * f_n$ before right shifting by $S_n$ in the result register R6$_i$. Table 1 provides the normalized binary number $q_{i\_n}$ for the illustrated example in the eighth column. Table 1 illustrates the result registers R6; before and after normalization and indicates that the sum of the normalized binary numbers $q_{i\_n}$ is 65636, which corresponds to a total probability that is very close to 100% (slightly more than 100% by 1).

The processor 102 may then derive from the normalized binary numbers $q_{i\_n}$ in the result registers R6; the respective probability $p_i$ (that are decimal numbers) corresponding to the input number $z_i$ by dividing the normalized values $q_{i\_n}$ in the result registers R6; by the output scaling factor $S_{out}$ (e.g., $2^{16}$ in the example of Table 1). The ninth column of Table 1 contains the probability $p_i$ expressed in percentage (%). The sum of the percentage is very slightly more than 100%.

For stability improvement, operations of the flow chart 200 with a potential to overflow a register (e.g., additions, subtractions, clipping from $N/2+1$ to $N/2$ bits) may be performed as saturating operations. In other words, if the result of an operation in a register is greater than the maximum value that can be stored in said register, the register is set to the maximum (e.g., all the register bits are set to one).

For precision improvement, divisions (including any division implemented by performing a right shift in a register) in the flow chart 200 are preferably rounded by adding half the divisor to the dividend. In other words, any division of the type "$a$ divided by $b$" is advantageously executed by adding '$b/2$' to the dividend '$a$' before dividing by the divisor '$b$' (or performing a corresponding right shift in a register).

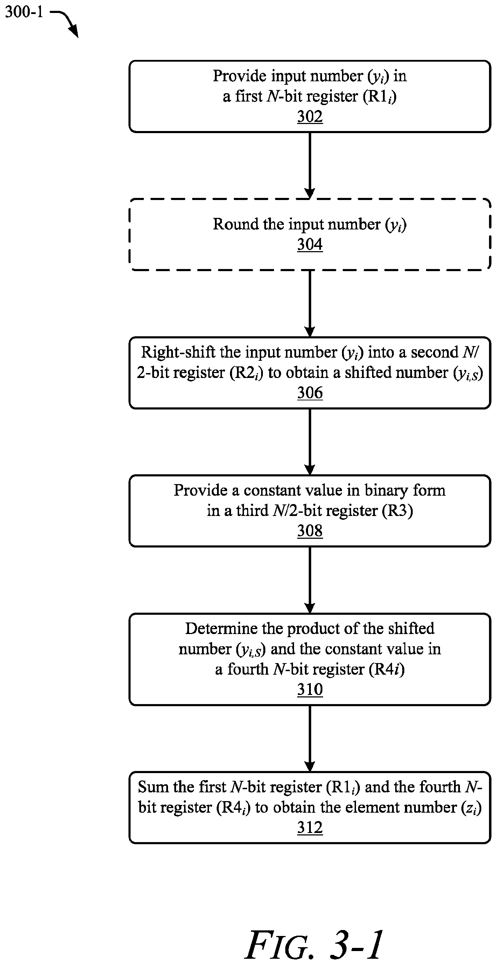

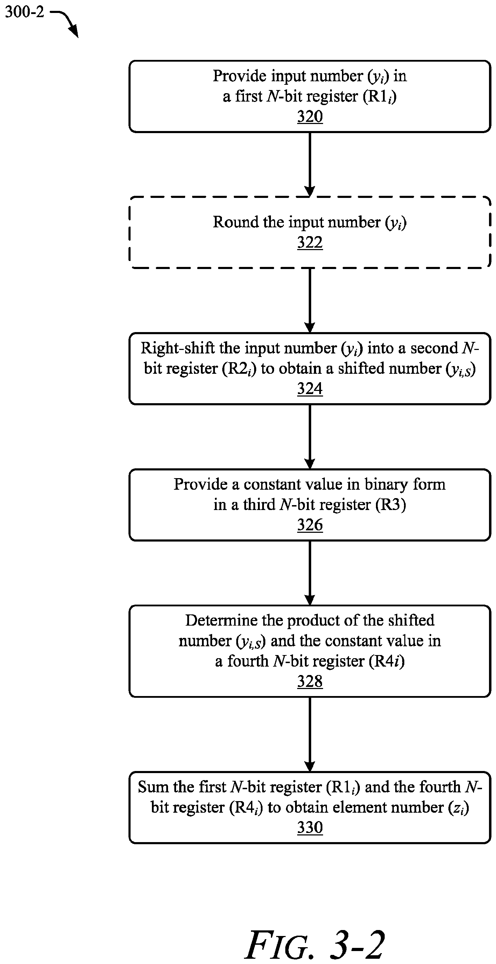

FIGs. 3-1 and 3-2 illustrate exemplified flow charts 300-1 and 300-2, respectively, to determine element numbers z as part of executing a SoftMax function using piecewise approximation. Flow charts 300-1 and 300-2 are shown as exemplified operations (or acts) performed, but not necessarily limited to the order or combinations in which the operations are shown herein. In particular, flow charts 300-1 and 300-2 provide exemplified operations to carry out step 208 (e.g., determine element numbers $y$ by multiplying by an approximation of the inverse of the natural logarithm of two) of flow chart 200. Further, any one of one or more of the operations may be repeated, combined, or reorganized to provide other flow charts. In portions of the following discussion, reference may be made to the entities detailed in FIG. 1, reference to which is made for example only. The techniques are not limited to performance by one entity or multiple entities.

The operations of flow chart 300-1 of FIG. 3-1 begins with a step 302, in which the processor 102 provides each input number $y_i$ in a first $N$-bit register R1$_i$. As an example, for the processing device 100 of FIG. 1, each input number $y_i$ is stored in the first 32-bit register 108 (R1$_i$).

In an optional step 304, the processor 102 rounds each input number $y_i$. In particular, the processor 102 adds $2^{N/2-2}$ to the input number $y_i$.

In a step 306, the processor 102 performs a right shifting of each input number $y_i$ into a second $N/2$-bit register R2$_i$. The right shifting is equal to $N/2-1$. For the processing device 100 of FIG. 1, each input number $y_i$ is right shifted by 15 bits in a second 16-bit register 108 (R2i). In other words, the $N/2-1$ (e.g., 15 in the illustrated example) less-significant bits are discarded by right shifting. The $N/2+1$ (e.g., 17 in the given example) most-significant bits are processed using one of the following rules. If the input number $y_i$ after right shifting by $N/2-1$ does not overflow the second N/2-bit register R2$_i$, the shifted input number $y_{i,T,}$ is fitted or stored into the second N/2-bit register R2$_i$. For example, when $N$ is equal to 32, if the most-significant bit (e.g., the 32$^{nd}$ bit) of the shifted input number is zero, the 16 least significant of the 17 bits of the input number $y_i$ are right shifted by 15 and transferred into the second $N/2$ bit register R2$_i$. Otherwise, if the input number $y$, after right shifting by $N/2-1$ overflows the second $N/2$-bit register R2$_i$, the second $N/2$-bit register R2$_i$ is saturated. For example, if the most significant (the $N^{th}$ bit) bit of shifted input number $y_{i,T,}$ is 1, each of the other $N/2$ (e.g., 16) most-significant bits (e.g., from the $(N-1)^{th}$ to the $N/2^{th}$ bit) are set to 1 and transferred into the second $N/2$-bit register R2$_i$ that is consequently saturated.

The shifted input number, which is referred to as $y_{i,T,}$ is stored in the second $N/2$-bit register R2$_i$. In the domain of decimal numbers, this right-shifting of the input number $y_i$ by $N/2-1$ bits corresponds to a division by $2^{N/2-1}$.

In a step 308, the processor 102 provides or loads a constant value approximating the inverse of the natural logarithm of two minus one ( $\frac{1}{ln(2)} - 1$ ) scaled by $2^{N/2-1}$ in binary form in a third N/2-bit register R3. The constant value has an approximate value of 0.442695041. The constant value may be precalculated (and optionally after scaling by $2^{N/2-1}$) and stored in memory in the processing device 100 or calculated in real time.

In a step 310, the processor 102 determines or calculates the product of the second N/2-bit register $R2_i$ (e.g., the shifted input number $y_{i,T}$) and the third N/2-bit register R3 (e.g., the constant value scaled by $2^{N/2-1}$) and stores the product into a fourth N-bit register $R4_i$. The product corresponds to $\left(\frac{1}{ln(2)} - 1\right) * y_{i,T} \cong 0.442695041 * y_{i,T}$ , scaled by the input scaling factor $S_{in} = 2^\sigma$.

In a step 312, the processor 102 sums the first N-bit register $R1_i$ and the fourth N-bit register $R4_i$ to obtain the element number $z_i$, which is scaled by the input scaling factor $S_{in}$, and stores it into a fifth N-bit register $R5_i$. Optionally, the step 312 is a saturating addition in which if the result of the addition overflows the N-bit register $R5_i$ (e.g., it is greater than the maximum value in the N-bit register $R5_i$) all the bits are set to 1 in the N-bit register $R5_i$ (e.g., the N-bit register $R5_i$ is set to the maximum value). The saturation allows some unreasonable results (e.g., low probabilities becoming very large by numerical overflow due to the two's complement representation) to be avoided. Alternatively, the result of step 312 may be overwritten in one of the two N-bit registers $R1_i$ and R4;.

In an alternative implementation of flowchart 300-1, the steps 306 and 308 are slightly varied. In right-shifting of step 306, the processor 102 performs a right shifting of the input number $y_i$ by N/2 in a second N/2-bit register $R2_i$ (e.g., in the illustrated example, this results in a right shifting by 16 bits in a 16-bit register $R2_i$). In the step 308, the processor 102 provides or loads the constant value that approximates ( $\frac{1}{ln(2)} - 1$ ) scaled by $2^{N/2}$ in binary form in a third N/2-bit register R3. This alternative implementation of flow chart 300-1 is less precise but less computationally expensive.

The operations of flowchart 300-2 of FIG. 3-2 begins with a step 320, which is identical to step 302 of FIG. 3-1. In the step 320, the processor 102 provides each input number $y_i$ in a first N-bit register $R1_i$. As an example, for the processing device 100 of FIG. 1, each input number $y_i$ is stored in the first 32-bit register 108 ($R1_i$).

In an optional step 322, which is similar to the optional step 304 of FIG. 3-1, the processor 102 rounds each input number $y_i$. In particular, the processor 102 adds $2^{N/2-3}$ to the input number yr.

In a step 324, which is similar to the step 306 of FIG. 3-1, the processor 102 performs a right shifting of each input number $y_i$ into a second N/2-bit register $R2_i$. The right shifting is equal to N/2-2. For the processing device 100 of FIG. 1, each input number $y_i$ is right shifted by 14 bits in a second 32-bit register 108 (R2;). In other words, the N/2-2 (e.g., 14 in the illustrated example) less-significant bits are discarded by right shifting. The N/2+2 (e.g., 18 in the given example) most-significant bits are maintained in the first N-bit register $R2_i$ as the N/2+2 least-significant bits (e.g., the N/2-2 most significant bits are set to 0). The first and the second N-bit register $R1_i$ and $R2_i$ may either be the same N-bit register or two distinct N-bit registers.

In a step 326, which is similar to the step 308 of FIG. 3-1, the processor 102 provides or loads a constant value that approximates the inverse of the natural logarithm of two minus one ( $\frac{1}{ln(2)} - 1$ ) scaled by $2^{N/2-2}$ in binary form in a third N-bit register R3. The constant value has an approximate value of 0.442695041. The constant value may be precalculated (and optionally after scaling by $2^{N/2-1}$) and stored in memory in the processing device 100 or calculated in real time.

In a step 328, which is similar to the step 310 of FIG. 3-1, the processor 102 determines or calculates the product of the second N-bit register $R2_i$ (e.g., the shifted input number $y_{i,T}$) and the third N-bit register R3 (e.g., the constant value scaled by $2^{N/2-1}$) and stores the product into a fourth N-bit register $R4_i$. The product corresponds to

$$\left(\frac{1}{ln(2)} - 1\right) * y_{i,T} \cong 0.442695041 * y_{i,T}$$

, scaled by the input scaling factor $S_{in} = 2^\sigma$.

This multiplication in step 328 is more costly in computing resources than the multiplication of step 318, which is a N/2-bit by N/2-bit multiplication. Alternatively, the second N-bit register $R2_i$ (which may also be the first register $R1_i$ in cases that the input number $y_i$ is right shifted in the same register for step 324) can be overwritten by the result of the multiplication (instead of using another N-bit register). In other words, the fourth N-bit register $R4_i$ may be the N-bit register $R2_i$.

In a step 330, which is similar to step 312 of FIG. 3-1, the processor 102 sums the first $N$-bit register $R1_i$ and the fourth $N$-bit register $R4_i$ to obtain the element number $z_i$, which is scaled by the input scaling factor $S_{in}$, and stores it into a fifth $N$-bit register $R5_i$. Optionally, the step 330 is a saturating addition in which if the result of the addition overflows the $N$-bit register $R5_i$ (e.g., it is greater than the maximum value in the $N$-bit register $R5_i$) all the bits are set to 1 in the $N$-bit register $R5_i$ (e.g., the N-bit register $R5_i$ is set to the maximum value). The saturation allows some unreasonable results (e.g., low probabilities becoming very large by numerical overflow due to the two's complement representation) to be avoided. Alternatively, the result of step 330 may be overwritten in one of the two A-bit registers $R1_i$ and $R4_i$.

In flow chart 300-2, there is no need for saturation. The operations of flow chart 300-2 are more precise (because there is one more bit of precision for the shifted input number) but also a little more costly in computing resources.

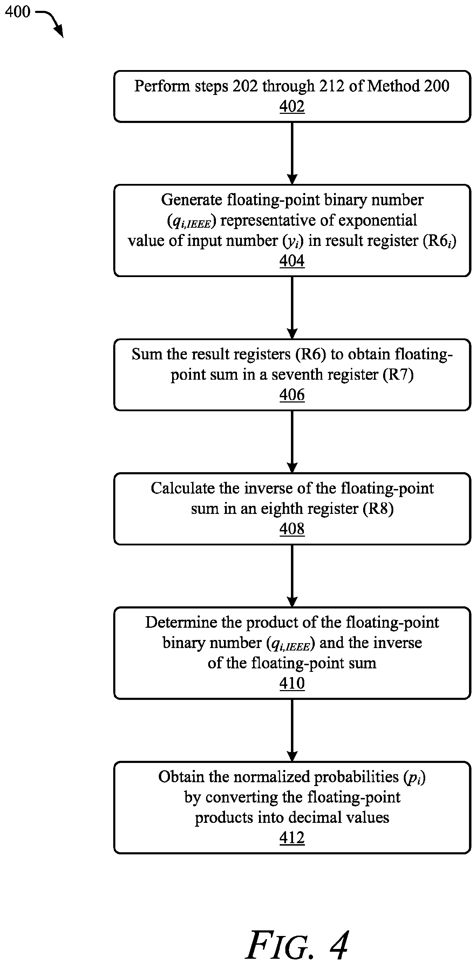

FIG. 4 illustrates another exemplified flow chart 400 to execute a SoftMax function using piecewise approximation. Flow chart 400 is shown as exemplified operations (or acts) performed, but not necessarily limited to the order or combinations in which the operations are shown herein. Further, any one of one or more of the operations may be repeated, combined, or reorganized to provide other flow charts. In portions of the following discussion, reference may be made to the entities detailed in FIGs. 1 through 3-2, reference to which is made for example only. The techniques are not limited to performance by one entity or multiple entities.

In performing the operations of flow chart 400, the processor 102 executes a positive and fixed-point approach. The flow chart 400 reduces the efforts to use floating point operations with the processor 102 calculating more in fixed points and less in floating points.

In a step 402, the processor 102 performs the steps 202 through 212 or the steps 208 through 212 described in connection with the flow chart 200 of FIG. 2.

In a step 404, the processor 102 generates a floating-point binary number $q_{i,IEEE}$ representative of the exponential value of each input number $y_i$ in a $N$-bit result register $R6_i$ (e.g., the sixth registers 118) by combining the fraction component $f_{c,i}$ and the integral part $int_i$. In flow chart 400, the floating-point approach means that all the binary numbers representative of the exponential values of the input numbers $y$ are floating-point numbers and, in particular, IEEE 754 floating-point numbers. According to the IEEE standard for Floating-Point Arithmetic (IEEE 754), a $N$-bit floating point has a layout defined by one sign bit (the most significant bit), a $N1$-bit exponent part and a $N2$-bit mantissa. In an example layout for a 32-bit floating point number (-248,75), the exponent is a 8-bit part and the mantissa is a 23-bit part.

The processor 102 generates the floating-point binary number $q_{i,IEEE}$ by combining the integral part $int_i$ and the IEEE 754 exponent bias (e.g., by subtracting the integral part $int_i$ from the bias) and transferring the integral part $int_i$ combined with the IEEE 754 exponent bias in the exponent part of the floating-point binary number $q_{i,IEEE}$ in the A-bit result register $R6_i$. The processor 102 then transfer the fraction component $f_{c,i}$ into the mantissa of the floating-point binary number $q_{i,IEEE}$ in the A-bit result register $R6_i$, if needed, by adding bits set at 0 on the least significant bits (e.g., if the fraction component $f_{c,i}$ is represented by 16 bits, it is transferred to the 16 most significant bits of the mantissa and the other least significant bits of the mantissa are set to 0). In this way, the exponent of the floating-point binary number $q_{i,IEEE}$ is a combination of the integral part $int_i$ stored in binary form in the result register $R6_i$ and the IEEE 754 exponent bias and the mantissa is directly derived from the fraction component $f_{c,i}$. In the flow chart 400, the constants A, B, C, D, and E used to approximate the fraction component $f_{c,i}$ are adjusted to match the IEEE 754 fraction components, which means the fraction components $f_c$ are identical or directly transformable from one to the other (e.g., by simply adding 0 on the right).

The processor 102 then adds the result registers $R6_i$ by performing a floating-point addition to obtain a sum $\Sigma_{IEEE}$, which is a floating-point number, in a result register R7. The processor 102 calculates the inverse of the sum $\Sigma_{IEEE}$ and stores the result in a register R8 (e.g., the eighth register 122) in floating-point. The processor 102 then multiplies each result register $R6_i$ by the register R8. In other words, the product of each floating-point binary number $q_{i,IEEE}$ and the inverse of the sum $\Sigma_{IEEE}$ is calculated and stored in a register $R8_i$ that is a A-bit register. The normalized probability $p_i$ corresponding to the input number $y_i$ can be obtained by converting the floating-point numbers stored in the registers $R8_i$ into decimal values.

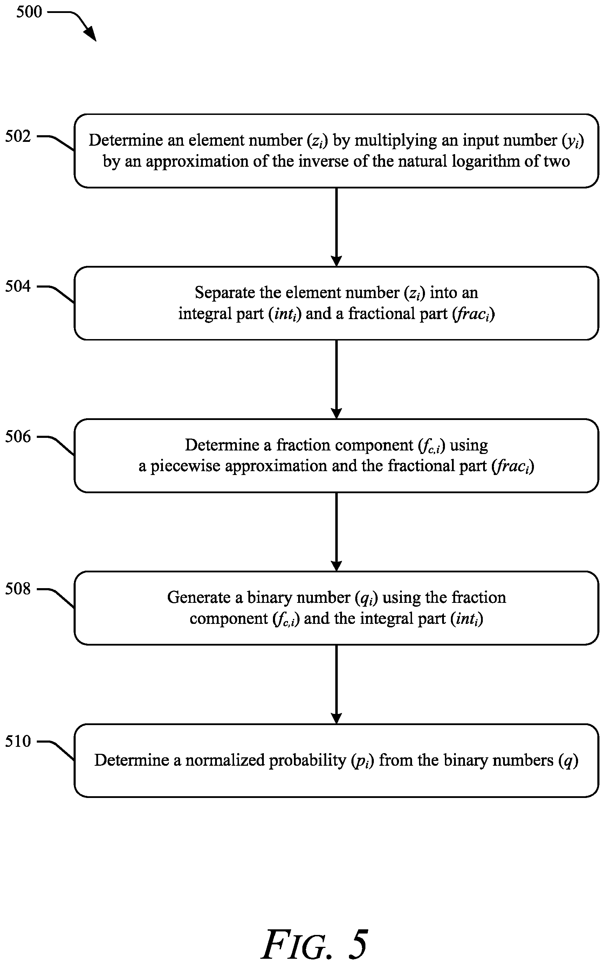

FIG. 5 illustrates an exemplified method 500 to execute a SoftMax function using piecewise approximation. In other words, method 500 illustrates operations to process classification outputs (or offset values thereof) of a neural network to generate normalized probabilities thereof. Method 500 is shown as operations (or acts) performed, but not necessarily limited to the order or combinations in which the operations are shown herein. Further, any one of one or more of the operations may be repeated, combined, or reorganized to provide other methods. In portions of the following discussion, reference may be made to the processor 102 of FIG. 1, and other entities detailed in FIGs. 1 through 4 reference to which is made for example only. The techniques are not limited to performance by one entity or multiple entities.

At step 502, for a quantity $K$ of input numbers $y$, an element number $z_i$ is determined by multiplying a corresponding input number $y_i$ by an approximation of the inverse of the natural logarithm of two. For example, the processor 102 multiplies each input number $y_i$ by a constant representing or approximating the inverse of the natural logarithm of two to determine a corresponding element number $z_i$.

In one embodiment, the processor 102 may calculate each element number $z_i$ by storing each input number $y_i$ in binary form into a first N-bit register, with $N$ being a power of two and greater than or equal to two. The processor 102 may then right shift each input number $y_i$ by $N/2 - 1$ and store the right-shifted input number $y_{i,T}$ into a second N/2-bit register. If the input number $y_i$, after right shifting by $N/2-1$, does not overflow the second N/2-bit register, the right-shifted input number $y_{i,T}$ may be fitted into the second N/2-bit register. If the input number $y_i$, after right shifting by $N/2-1$, overflows the second N/2-bit register, the second N/2-bit register may be saturated. The right-shifted input number $y_{i,T}$ may also be rounded by adding $2^{N/2-2}$ to the input number $y_i$ before right shifting by $N/2-1$. The processor 102 may then provide a constant value in binary form into a third N/2-bit register. The constant value is approximately equal to an inverse of the natural logarithm of two minus one and scaled by $2N/2-1$. The processor 102 may calculate a product of the second N/2-bit register and the third N/2-bit register and store the product into a fourth N-bit register. The processor 102 may then determine a sum of the first N-bit register and the fourth N-bit register by using a saturating addition to obtain the element number $z_i$ and storing the sum in a fifth N-bit register.

In another implementation, the processor 102 may calculate each element number $z_i$ by storing each input number $y_i$ in binary form into a first N-bit register. The processor 102 may then right shift the input number $y_i$ by $N/2-2$ and store the right-shifted input number $y_{i,T}$ into a second N-bit register. The right-shifted input number $y_{i,T}$ may also be rounded by adding $2^{N/2-3}$ to the input number $y_i$ before right shifting by $N/2-2$. A constant value may then be provided in binary form and scaled by $2N/2-2$ into a third N-bit register. The constant value is approximately equal to an inverse of the natural logarithm of two minus one. The processor 102 may then calculate a product of the second N-bit register and the third N-bit register and store the product into a fourth N-bit register. Finally, the processor 102 may determine a sum of the first N-bit register and the fourth N-bit register by using a saturating addition to obtain the element number $z_i$ scaled by an input scaling factor $S_{in}$ and store the sum in a fifth N-bit register.

Depending on the output of a penultimate activation layer in a multi-layer neural network, the processor 102 may derive each input number $y_i$ from a corresponding original input number $x_i$ contained in an input vector of $K$ original input numbers $x$. The processor 102 may select the maximum original input number $x_{max}$ from among the original input numbers $x$. For each original input number $x_i$, the processor 102 may subtract the maximum original input number $x_{max}$ from the input number $x_i$ so as to obtain a negative or zero input number $y_i$ or it may subtract the original input number $x_i$ from the maximum original input number $x_{max}$ so as to obtain a zero or positive input number $y_i$.

In addition, each input number $y_i$ may be in binary form and scaled by an input scaling factor $S_{in}$. The input scaling factor $S_{in}$ may be determined based on the expected smallest and largest values of the input numbers $y$ and a size $N$ of the first registers. The processor 102 may store each input number $y_i$ in a first N-bit register.

At step 504 and for each element number $z_i$, the element number $z_i$ is separated into an integral part $int_i$ and a fractional *part fract*. For example, the processor 102 can provide the integral part $int_i$ and a fractional *part frac;* into corresponding registers.

At step 506 and for each fractional *part fract,* a fraction component $f_{c,i}$ is determined using a piecewise approximation (e.g., a linear approximation or a quadratic approximation) of two raised to the negation of the fractional part $frac_i$ (e.g., $2^{-frac_i}$ ). For example, the processor 102 may utilize a linear approximation or a quadratic approximation. In particular, the processor 102 may approximate the fraction component $f_{c,i}$ by adding a first constant A to a first product of a second constant B and the fractional *part fract* to calculate a linear approximation thereof. The processor 102 may also approximate the fraction component $f_{c,i}$ by adding a third constant C to a second product of a fourth constant D and the fractional *part fract* and a third product of a fifth constant E and a square of the fractional part $frac_i$ (e.g,

$$C + Dfrac_i + Efrac_i^2$$

) to calculate a quadratic approximation thereof. Similarly, the processor 102 may approximate the fraction component $f_{c,i}$ by adding a third constant C' to a product of the fractional *part fract* and the sum of a fourth constant D' and a product of a fifth constant E' and the fractional part $frac_i$ (e.g, $C' + frac_i(D' + E' * frac_i)$) to calculate a quadratic approximation thereof

At step 508 and corresponding to each input number $y_i$, a binary number $q_i$ that represents an exponential value of the input number $y_i$ is generated using the fraction component $f_{c,i}$ and the integral part $int_i$. For example, the processor 102 may right-shift the fraction component $f_{c,i}$ by a value of the integral part $int_i$ to determine each binary number $q_i$. In particular, the processor 102 may store the corresponding fraction component $f_{c,i}$ into the respective result register and right shift the fraction component $f_{c,i}$ by the integral part $int_i$ into the respective result register. In another implementation, the processor 102 may generate the binary number $q_i$ in the result register in a form of an IEEE 754 floating-point number that includes an exponent and a mantissa. The exponent is a combination of the integral part $int_i$ in binary form and the IEEE 754 exponent bias. The mantissa is derived from the fraction component $f_{c,i}$.

Steps 502 through 508 provide an example of determining the binary numbers $q$ corresponding to respective input numbers $y$ of the classification outputs of a neural network. The binary numbers $q$ may be determined using an approximation of the SoftMax function that uses integer-based operations without using an exponential operation. The binary numbers $q$ represent a probability distribution of each input number.

At step 510 and corresponding to each input number $y_i$, a normalized probability $p_i$ is determined from the binary numbers q. For example, the processor 102 may divide each binary number $q_i$ by a sum of the binary numbers $q$. In particular, the processor 102 may place each binary number $q_i$ into a respective result register and sum the quantity K of result registers into a sum register. The processor 102 may then divide each result register by the sum register to calculate the normalized probabilities p. Alternatively, the processor may then multiply each result register by an inverse of the sum register (e.g., to perform a single division operation) to calculate the normalized probabilities $p$.

In another implementation, the processor 102 may sum the quantity $K$ of result registers into a sum register and then obtain a normalization factor $f_n$ by scaling a value $V_{100}$ by a normalization scaling factor $S_n$. The value $V_{100}$ is obtained by setting to 1 all the bits in each result register. The processor 102 may then apply the normalization factor $f_n$ to each result register with an inverse scaling by the normalization scaling factor $S_n$ to obtain a normalized binary number $q_{i\_n}$ and then divide each result register by the sum register (e.g., a sum of the normalized binary numbers $q_n$) to calculate the normalized probabilities $p$.

EXAMPLES

In the following section, examples are provided.

Example 1. A computer-implemented method of processing a classification output of a neural network, the method comprising: for each input number $y_i$, determining, using an approximation of a SoftMax function that uses integer-based operations without using an exponential operation, a binary number $q_i$ that represents a probability distribution of the input number $y_i$, each input number being an offset of a respective classification output of the neural network; and for each input number $y_i$, determining a normalized probability $p_i$ from the binary numbers $q$.

Example 2. The computer-implemented method of Example 1, wherein determining the binary number $q_i$ comprises: for each input number $y_i$, determining an element number $z_i$ by multiplying the input number $y_i$ by an approximation of an inverse of the natural logarithm of two; for each element number $z_i$, separating the element number z; into an integral part $int;$ and a fractional part $frac_i$; for each fractional $partfrac_i$, determining a fraction component $f_{c,i}$ using a piecewise approximation of two raised to a power of a negation the fractional part $frac_i$; and generating the binary number $q_i$ using the fraction component $f_{c,i}$ and the integral part $int_i$, the binary number $q_i$ corresponding to the input number $y_i$ and further representing an exponential value of the input number $y_i$.

Example 3. The computer-implemented method of Example 2, wherein determining the fraction component $f_{c,i}$ comprises calculating a linear approximation or a quadratic approximation of two raised to the power of the negation of the fractional *part fract* by: approximating the fraction component $f_{c,i}$ by adding a first constant A to a first product of a second constant B and the fractional *part fract*, or approximating the fraction component $f_{c,i}$ by adding a third constant C to a second product of a fourth constant D and the fractional part $frac_i$ and a third product of a fifth constant E and a square of the fractional *part fract.*

Example 4. The computer-implemented method of any one of Examples 1 through 3, wherein determining the normalized probability $p_i$ from the binary numbers $q$ comprises: placing each binary number $q_i$ into a respective result register; summing the quantity K of result registers into a sum register; and multiplying each result register by an inverse of the sum register or dividing each result register by the sum register.

Example 5. The computer-implemented method of Example 4, wherein generating the binary number $q_i$ comprises right shifting the fraction component $f_{c,i}$ by a value of the integral part $int_i$ by: storing the corresponding fraction component $f_{c,i}$ into the respective result register and right shifting the fraction component $f_{c,i}$ by the value of the integral part $int_i$ into the respective result register.

Example 6. The computer-implemented method of any one of the previous Examples, wherein each input number $y_i$ is scaled by an input scaling factor $S_{in}$ and stored in a first $N$-bit register.

Example 7. The computer-implemented method of Example 6, wherein the input scaling factor $S_{in}$ is determined based on expected smallest and largest values of the input numbers $y$ and a size $N$ of the first registers.

Example 8. The computer-implemented method of any one of Examples 2 through 5, wherein determining the element number z; by multiplying the input number $y_i$ by the approximation of the inverse of the natural logarithm of two comprises: storing each input number $y_i$ in binary form into a first N-bit register; right shifting the input number $y_i$ by $N/2-1$ and storing the right-shifted input number $y_{i,T}$ into a second $N/2$-bit register according to: if the input number $y_i$, after right shifting by $N/2-1$, does not overflow the second $N/2$-bit register, fitting the right-shifted input number $y_{i,T}$ into the second $N/2$-bit register, or if the input number $y_i$, after right shifting by $N/2-1$, overflows the second $N/2$-bit register, saturating the second $N/2$-bit register; providing a constant value in binary form into a third $N/2$-bit register, the constant value being approximately equal to the inverse of the natural logarithm of two minus one scaled by $2N/2-1$; calculating a product of the second $N/2$-bit register and the third $N/2$-bit register and storing the product into a fourth $N$-bit register; and determining a sum of the first $N$-bit register and the fourth $N$-bit register by implementing a saturating addition to obtain the element number $z_i$ and storing the sum in a fifth $N$-bit register.

Example 9. The computer-implemented method of Example 8, wherein determining the element number $z_i$ by multiplying the input number $y_i$ by the approximation of the inverse of the natural logarithm of two further comprises: rounding the right-shifted input number $y_{i,T}$ by adding $2^{N/2-2}$ to the input number $y_i$ before right shifting by $N/2-1$.

Example 10. The computer-implemented method of any one of Examples 2 through 5, wherein determining the element number $z_i$ by multiplying the input number $y_i$ by the approximation of the inverse of the natural logarithm of two comprises: storing each input number $y_i$ in binary form into a first N-bit register; right shifting the input number $y_i$ by $N/2-2$ and storing the right-shifted input number $y_{i,T}$ into a second N-bit register; providing a constant value in binary form scaled by $2N/2-2$ into a third N-bit register (R3), the constant value being approximately equal to the inverse of the natural logarithm of two minus one; calculating a product of the second N-bit register and the third N-bit register and storing the product into a fourth N-bit register; and determining a sum of the first N-bit register and the fourth N-bit register by implementing a saturating addition to obtain the element number z; scaled by an input scaling factor $S_{in}$ and storing the sum in a fifth $N$-bit register.

Example 11. The computer-implemented method of Example 10, wherein determining the element number $z_i$ by multiplying the input number $y_i$ by the approximation of the inverse of the natural logarithm of two further comprises: rounding the right-shifted input number $y_{i,T}$ by adding $2^{N/2-3}$ to the input number $y_i$ before right shifting by $N/2-2$.

Example 12. The computer-implemented method of Example 9 or 11, wherein determining the normalized probability $p_i$ comprises: summing the result registers into a sum register; obtaining a normalization factor $f_n$ by scaling a value $V_{100}$, the value $V_{100}$ obtained by setting to 1 all the bits in each result register, by a normalization scaling factor $S_n$; and applying the normalization factor $f_n$ to each result register with an inverse scaling by the normalization scaling factor $S_n$ to obtain a normalized binary number $q_{i\_n}$.

Example 13. The computer-implemented method of Example 4, wherein the binary number $q_i$ is generated in the result register in a form of an IEEE 754 floating-point number including an exponent and a mantissa, wherein the exponent is a combination of the integral part $int_i$ in binary form and the IEEE 754 exponent bias and the mantissa is derived from the fraction component $f_{c,i}$.

Example 14. The computer-implemented method of any one of the previous Examples, wherein the computer-implemented method further comprises: deriving each input number $y_i$ from a corresponding original input number $x_i$ by selecting the maximum original input number $x_{max}$ from among original input numbers $x$, the original input numbers $x$ being the classification output of the neural network; and for each original input number $x_i$: subtracting $x_{max}$ from x; so as to obtain a negative or zero input number $y_i$; or subtracting x; from $x_{max}$ so as to obtain a zero or positive input number $y_i$.

Example 15. A system comprising one or more processors configured to perform the computer-implemented method of any one of the previous Examples.

Example 16. A non-transitory computer-readable media that stores computer-executable instructions that, when executed by a processor of a data processing device, cause the processor to perform the computer-implemented method of any one of Examples 1 through 14.

CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the scope of the disclosure as defined by the following claims.

**Claims**

1. A computer-implemented method of processing a classification output of a neural network, the method comprising:

    for each input number $y_i$, determining, using an approximation of a SoftMax function that uses integer-based operations without using an exponential operation, a binary number $q_i$ that represents a probability distribution of the input number $y_i$, each input number being an offset of a respective classification output of the neural network; and
    for each input number $y_i$, determining a normalized probability $p_i$ from the binary numbers $q$.

2. The computer-implemented method of claim 1, wherein determining the binary number $q_i$ comprises:

    for each input number $y_i$, determining an element number $z_i$ by multiplying the input number $y_i$ by an approximation of an inverse of the natural logarithm of two;
    for each element number $z_i$, separating the element number $z_i$ into an integral part $int_i$ and a fractional part $frac_i$.

for each fractional part $frac_i$, determining a fraction component $f_{c,i}$ using a piecewise approximation of two raised to a power of a negation of the fractional *part fract,* and

generating the binary number $q_i$ using the fraction component $f_{c,i}$ and the integral part $int_i$, the binary number $q_i$ corresponding to the input number $y_i$ and further representing an exponential value of the input number $y_i$.

3. The computer-implemented method of claim 2, wherein determining the fraction component $f_{c,i}$ comprises calculating a linear approximation or a quadratic approximation of two raised to the power of the negation of the fractional *part fract* by:

approximating the fraction component $f_{c,i}$ by adding a first constant A to a first product of a second constant B and the fractional *part fract,* or

approximating the fraction component $f_{c,i}$ by adding a third constant C to a second product of a fourth constant D and the fractional *part fract* and a third product of a fifth constant E and a square of the fractional *part fract.*

4. The computer-implemented method of any one of claims 1 through 3, wherein determining the normalized probability $p_i$ from the binary numbers $q$ comprises:

placing each binary number $q_i$ into a respective result register;

summing the quantity $K$ of result registers into a sum register; and

multiplying each result register by an inverse of the sum register or dividing each result register by the sum register.

5. The computer-implemented method of claim 4, wherein generating the binary number $q_i$ comprises right shifting the fraction component $f_{c,i}$ by a value of the integral part $int_i$ by:

storing the corresponding fraction component $f_{c,i}$ into the respective result register and right shifting the fraction component $f_{c,i}$ by the value of the integral part $int_i$ into the respective result register.

6. The computer-implemented method of any one of the previous claims, wherein each input number $y_i$ is scaled by an input scaling factor $S_{in}$ and stored in a first $N$-bit register.

7. The computer-implemented method of claim 6, wherein the input scaling factor $S_{in}$ is determined based on expected smallest and largest values of the input numbers $y$ and a size $N$ of the first registers.

8. The computer-implemented method of any one of claims 2 through 5, wherein determining the element number $z_i$ by multiplying the input number $y_i$ by the approximation of the inverse of the natural logarithm of two comprises:

storing each input number $y_i$ in binary form into a first $N$-bit register;

right shifting the input number $y_i$ by $N/2-1$ and storing the right-shifted input number $y_{i,T}$ into a second $N/2$-bit register according to:

if the input number $y_i$, after right shifting by $N/2-1$, does not overflow the second $N/2$-bit register, fitting the right-shifted input number $y_{i,T}$ into the second $N/2$-bit register, or

if the input number $y_i$, after right shifting by $N/2-1$, overflows the second $N/2$-bit register, saturating the second $N/2$-bit register;

providing a constant value in binary form into a third $N/2$-bit register, the constant value being approximately equal to the inverse of the natural logarithm of two minus one scaled by $2N/2-1$;

calculating a product of the second $N/2$-bit register and the third $N/2$-bit register and storing the product into a fourth N-bit register; and

determining a sum of the first N-bit register and the fourth N-bit register by implementing a saturating addition to obtain the element number z; and storing the sum in a fifth N-bit register.

9. The computer-implemented method of claim 8, wherein determining the element number z; by multiplying the input number $y_i$ by the approximation of the inverse of the natural logarithm of two further comprises:

rounding the right-shifted input number $y_{i,T}$ by adding $2^{N/2-2}$ to the input number $y_i$ before right shifting by $N/2-1$.

10. The computer-implemented method of any one of claims 2 through 5, wherein determining the element number $z_i$ by multiplying the input number $y_i$ by the approximation of the inverse of the natural logarithm of two comprises:

storing each input number $y_i$ in binary form into a first $N$-bit register;

right shifting the input number $y_i$ by $N/2$-2 and storing the right-shifted input number $y_{i,T}$ into a second $N$-bit register;

providing a constant value in binary form scaled by $2N/2$-2 into a third $N$-bit register (R3), the constant value being approximately equal to the inverse of the natural logarithm of two minus one;

calculating a product of the second $N$-bit register and the third $N$-bit register and storing the product into a fourth $N$-bit register; and

determining a sum of the first $N$-bit register and the fourth $N$-bit register by implementing a saturating addition to obtain the element number $z_i$ scaled by an input scaling factor $S_{in}$ and storing the sum in a fifth $N$-bit register.

11. The computer-implemented method of claim 10, wherein determining the element number $z_i$ by multiplying the input number $y_i$ by the approximation of the inverse of the natural logarithm of two further comprises:

rounding the right-shifted input number $y_{i,T}$ by adding $2^{N/2\text{-}3}$ to the input number $y_i$ before right shifting by $N/2$-2.

12. The computer-implemented method of claim 9 or 11, wherein determining the normalized probability $p_i$ comprises:

summing the result registers into a sum register;

obtaining a normalization factor $f_n$ by scaling a value $V_{100}$, the value $V_{100}$ obtained by setting to 1 all the bits in each result register, by a normalization scaling factor $S_n$; and

applying the normalization factor $f_n$ to each result register with an inverse scaling by the normalization scaling factor $S_n$ to obtain a normalized binary number $q_{i\_n}$.

13. The computer-implemented method of claim 4, wherein the binary number $q_i$ is generated in the result register in a form of an IEEE 754 floating-point number including an exponent and a mantissa, wherein the exponent is a combination of the integral part $int_i$ in binary form and the IEEE 754 exponent bias and the mantissa is derived from the fraction component $f_{c,i}$.

14. The computer-implemented method of any one of the previous claims, wherein the computer-implemented method further comprises:

deriving each input number $y_i$ from a corresponding original input number $x_i$ by selecting the maximum original input number $x_{max}$ from among original input numbers x, the original input numbers x being the classification output of the neural network; and

for each original input number x;:

subtracting $x_{max}$ from $x_i$ so as to obtain a negative or zero input number $y_i$; or

subtracting x; from $x_{max}$ so as to obtain a zero or positive input number $y_i$.

15. A system comprising one or more processors configured to perform the computer-implemented method of any one of the previous claims.

Processing Device
100

Processor
102

Computer-Readable Storage Media
104

Registers
106

First Registers (R1$_i$ ... R1$_K$)
108

Second Registers (R2$_i$ ... R2$_K$)
110

Third Register (R3)
112

Fourth Registers (R4$_i$ ... R4$_K$)
114

Fifth Registers (R5$_i$ ... R5$_K$)
116

Sixth Registers (R6$_i$ ... R6$_K$)
118

Seventh Register (R7)
120

Eighth Registers (R8$_i$ ... R8$_K$)
122

*FIG. 1*

200

Obtain input vector of original input numbers ($x$)
202

Determine input number ($y_i$) by subtracting
from or by maximum input number ($x_{max}$)
204

Scale input number ($y_i$) by
an input scaling factor ($S_{in}$)
206

Determine element number ($z_i$) by multiplying
input number ($y_i$) by an approximation of the
inverse of the natural logarithm of two
208

Separate integral part ($int_i$) and fractional
part ($frac_i$) of the element number ($z_i$)
210

Determine fraction component ($f_{c,i}$)
corresponding to the fractional part ($frac_i$)
212

Determine binary number ($q_i$) by right-shifting the
fraction component ($f_{c,i}$) by the integral part ($int_i$)
214

Normalize the binary numbers ($q_i$) to obtain
normalized probabilities ($p_i$)
216

*FIG. 2*

300-1

Provide input number ($y_i$) in
a first $N$-bit register (R1$_i$)
302

Round the input number ($y_i$)
304

Right-shift the input number ($y_i$) into a second $N/2$-bit register (R2$_i$) to obtain a shifted number ($y_{i,S}$)
306

Provide a constant value in binary form
in a third $N/2$-bit register (R3)
308

Determine the product of the shifted
number ($y_{i,S}$) and the constant value in
a fourth $N$-bit register (R4$i$)
310

Sum the first $N$-bit register (R1$_i$) and the fourth $N$-bit register (R4$_i$) to obtain the element number ($z_i$)
312

*FIG. 3-1*

300-2

Provide input number ($y_i$) in
a first $N$-bit register (R1$_i$)
320

Round the input number ($y_i$)
322

Right-shift the input number ($y_i$) into a second $N$-
bit register (R2$_i$) to obtain a shifted number ($y_{i,s}$)
324

Provide a constant value in binary form
in a third $N$-bit register (R3)
326

Determine the product of the shifted
number ($y_{i,s}$) and the constant value in
a fourth $N$-bit register (R4$i$)
328

Sum the first $N$-bit register (R1$_i$) and the fourth $N$-
bit register (R4$_i$) to obtain element number ($z_i$)
330

*FIG. 3-2*

400 ⌐

```
┌─────────────────────────────────────────┐
│  Perform steps 202 through 212 of Method 200  │
│                    402                    │
└─────────────────────────────────────────┘
                      │
                      ▼
┌─────────────────────────────────────────┐
│      Generate floating-point binary number    │
│   ($q_{i,IEEE}$) representative of exponential │
│  value of input number ($y_i$) in result register (R6$_i$) │
│                    404                    │
└─────────────────────────────────────────┘
                      │
                      ▼
┌─────────────────────────────────────────┐
│   Sum the result registers (R6) to obtain floating- │
│     point sum in a seventh register (R7)   │
│                    406                    │
└─────────────────────────────────────────┘
                      │
                      ▼
┌─────────────────────────────────────────┐
│    Calculate the inverse of the floating-point │
│        sum in an eighth register (R8)     │
│                    408                    │
└─────────────────────────────────────────┘
                      │
                      ▼
┌─────────────────────────────────────────┐
│    Determine the product of the floating-point │
│      binary number ($q_{i,IEEE}$) and the inverse │
│            of the floating-point sum       │
│                    410                    │
└─────────────────────────────────────────┘
                      │
                      ▼
┌─────────────────────────────────────────┐
│    Obtain the normalized probabilities ($p_i$) │
│         by converting the floating-point   │
│          products into decimal values      │
│                    412                    │
└─────────────────────────────────────────┘
```

*FIG. 4*

500

502 — Determine an element number ($z_i$) by multiplying an input number ($y_i$) by an approximation of the inverse of the natural logarithm of two

504 — Separate the element number ($z_i$) into an integral part ($int_i$) and a fractional part ($frac_i$)

506 — Determine a fraction component ($f_{c,i}$) using a piecewise approximation and the fractional part ($frac_i$)

508 — Generate a binary number ($q_i$) using the fraction component ($f_{c,i}$) and the integral part ($int_i$)

510 — Determine a normalized probability ($p_i$) from the binary numbers ($q$)

*FIG. 5*

Europäisches
Patentamt

European
Patent Office

Office européen
des brevets

# EUROPEAN SEARCH REPORT

**Application Number**

EP 23 17 1172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 092 578 A1 (APTIV TECH LTD [BB]) 23 November 2022 (2022-11-23) * paragraph [0010] * * paragraph [0028] – paragraph [0083] * * figures 1-6 * | 1-15 | INV. G06N3/047 G06N3/048 |
| A | KANG KAI ET AL: "Object Detection from Video Tubelets with Convolutional Neural Networks", 2016 IEEE CONFERENCE ON COMPUTER VISION AND PATTERN RECOGNITION (CVPR), IEEE, 27 June 2016 (2016-06-27), pages 817-825, XP033021259, DOI: 10.1109/CVPR.2016.95 [retrieved on 2016-12-09] * the whole document * | 1-15 | |
| A | UDA N ET AL: "Controlling The Input/output Function Of The Neural Network By Variable Offset Rule", 19931025; 19931025 – 19931029, vol. 1, 25 October 1993 (1993-10-25), pages 540-544, XP010301842, * the whole document * | 1-15 | TECHNICAL FIELDS SEARCHED (IPC) G06N |

The present search report has been drawn up for all claims

| Place of search | Date of completion of the search | Examiner |
|---|---|---|
| The Hague | 21 September 2023 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 1172

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2023

| Patent document cited in search report | | Publication date | Patent family member(s) | | Publication date |
|---|---|---|---|---|---|
| EP 4092578 | A1 | 23-11-2022 | CN | 115374902 A | 22-11-2022 |
| | | | EP | 4092578 A1 | 23-11-2022 |
| | | | US | 2022383077 A1 | 01-12-2022 |

EPO FORM P0459

For more details about this annex : see Official Journal of the European Patent Office, No. 12/82